# EUROPEAN PATENT APPLICATION

(11) **EP 4 273 542 A1**
(43) Date of publication of application: **08.11.2023**
(21) Application number: 22172043.6
(22) Date of filing: 06.05.2022
(51) Int. Cl.: G01N 30/86, G01N 30/88, G01N 30/74

(54) **METHOD OF REFERENCING AN ANALYTE MEASUREMENT IN A PURIFICATION SYSTEM**

(71) Applicant: Sartorius Stedim Biotech GmbH, 37079 Göttingen (DE)
(72) Inventor: Hoehse, Marek, 37079 Göttingen (DE)
(74) Representative: Prinz & Partner mbB

(57) **Abstract**

In a method of referencing an analyte measurement in a purification system during a process step in a biopharmaceutical process, the following sub-steps are performed during the same process step: guiding a medium through a purification unit (10) where the analyte is either removed from or added to the medium; measuring at least one parameter related to the presence and/or quantity of the analyte with a first measurement system (16) at a first measurement location upstream of the purification unit (10); measuring the at least one parameter with a second measurement system (18) at a second measurement location downstream of the purification unit (10); and referencing the upstream measurement to the downstream measurement, or referencing the downstream measurement to the upstream measurement.

## Description

The invention relates to a method of referencing an analyte measurement in a purification system during a process step in a biopharmaceutical process. The invention also relates to a purification system comprising a measurement setup configured to perform this method.

Analyte concentrations in a medium, such as certain protein and DNA concentrations, are important control parameters in downstream processing. Standard equipment for detecting the presence and determining the quantity of an analyte includes UV/Vis spectrophotometers that detect a certain wavelength, typically somewhere between 220 and 390 nm, with a typical accuracy of 1 to 3 nm.

Typical measurement setups record spectra in transmission mode. This means that the sample to be measured is located between an excitation light source and a detector. Light source and detector can be directly coupled via classic optics, such as mirrors and lenses, or via fiber optics.

The spectral data is recorded in absorbance units (AU, a dimensionless quantity), which is defined as A = log10 (Φ₀/Φ), with Φ₀ = radiant flux received by the material, Φ = radiant flux transmitted by the material, Φ/Φ₀ = T = transmittance of that material. In terms of a typical chromatography unit (column or membrane) setup l₀ is the intensity of the incident light and I is the intensity of the transmitted light.

In the following, it will be differentiated between absorbance measurements of a process sample without an analyte (reference matrix) and absorbance measurements of a sample including the analyte. In particular, the absorbance of a matrix recorded by a spectrophotometer will be referred to as "l₀", whereas the absorbance of the sample including the analyte will be referred to as "I".

The general procedure for a UV/Vis measurement is as follows: (1) Recording of l₀, which is normally done with a sample that is similar to the process sample but does not contain the analyte. Often pure buffers are used. (2) Recording of I, which is done with the process sample including the analyte. Both measurements are standard within UV/Vis spectrophotometers. The reference l₀ is then applied as a reference to I in a standard manner to allow the contributions of the matrix itself, the detector, etc. to be subtracted from the measurement of the sample including the analyte in order to obtain an actual (corrected) absorption measurement result.

In theory, the recording of l₀ is straightforward, when it is an isolated measurement. However, challenges occur when a measurement system is integrated into a process equipment and used during the running process, especially a downstream process.

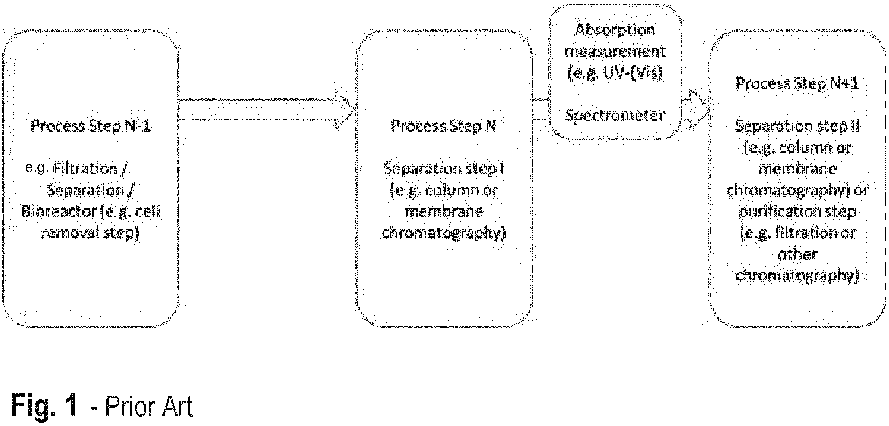

A typical and exemplary integration of a transmission measurement UV/Vis spectrophotometer in a downstream process is shown in Figure 1. The following description refers to a chromatography system, but also applies to other purification systems. Here, the process Step N to be monitored is the capture step. The cell broth of a bioreactor is filtered in process step N-1 and sent to a chromatography unit (column or membrane) with a Protein A membrane or resin. The target protein binds to the membrane or resin while the contaminants are passing. The contaminants can be detected by the UV/Vis spectrophotometer downstream of the chromatography unit (first detection case).

Then the buffer flowing through the Protein A capture step is changed in its composition allowing for the protein to be washed or solved from the adsorbent (elution). The target protein can now be detected with the UV/Vis spectrophotometer (second detection case).

Both detections are made downstream of the chromatography unit, i.e. downstream of process step N. For both detection cases (contaminants vs target protein) the reference matrix (medium without the analyte) for the recording of l₀ differs and has to be separately taken to achieve an optimal absorbance measurement.

In the second detection case, the reference for the target protein measurement would be the elution buffer without the target protein. Unfortunately, the UV/Vis spectrophotometer first sees the buffer including the washed down target protein. It is not before the target protein has been completely released from the chromatography unit until the UV/Vis spectrophotometer has the chance to make the appropriate l₀ measurement.

As already indicated, the typical integration of a measurement system is downstream of a chromatography unit in order to allow detection of the target protein in the eluate. It is also possible to detect DNA and HCP (host cell protein) during the filling of the chromatography unit and the column/membrane breakthrough (further detection cases).

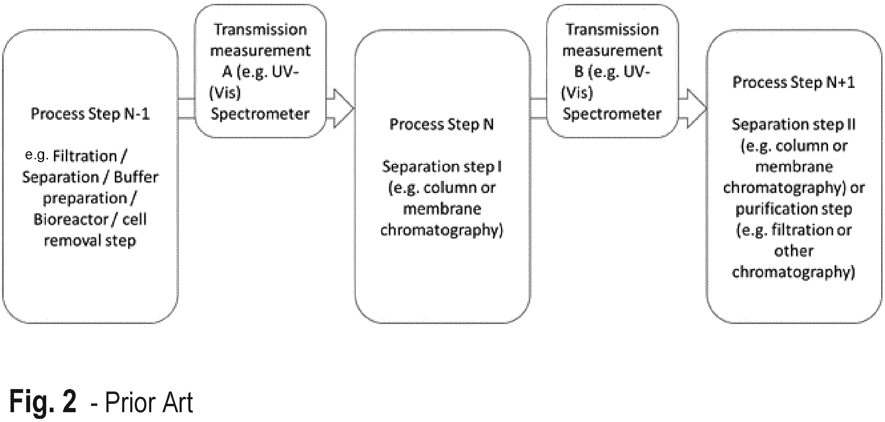

In another measurement setup, as shown in Figure 2, a further UV/Vis spectrophotometer is inserted to enable a transmission measurement upstream of the chromatography unit. The additional UV/Vis spectrophotometer can monitor the filling of the chromatography unit by quantifying the protein concentration. In the depicted example, the filtered cell broth passes the UV/Vis spectrophotometer before the target protein is adsorbed in the chromatography unit. The ideal reference would be the cell broth without the target protein. However this reference never passes the measurement position upstream of the chromatography unit. Accordingly, the problem of a compromised referencing of the measurement remains also exists in this use case.

Hitherto, the reference spectrum (l₀) is simply accepted to be not optimal, or it could be taken from old batches or lab trials, although such practice is not optimal, either.

In some applications, precise referencing to the correct buffer is not mandatory, especially when only qualitative information is required (e.g. protein absence or presence). In such cases it is common practice to simply to monitor deviations from a certain reference point in time (at which point the reference is taken). For quantitative predictions, however, one has to be more precise on how to select the correct sample for referencing. This problem is not solved so far.

WO 2010/151214 A1 describes a method for determining binding capacities of chromatography columns. A feed signal representative of the composition of a feed material provided to the inlet of the column is detected by a first detector positioned somewhere along the feed line. An effluent signal representative of the composition of the effluent from the column is detected by a second detector positioned somewhere along the effluent line. A determining unit analyzes the signals detected by the first and second detectors in order to determine binding capacities of the chromatography column. In particular, a delta signal is calculated which is defined to be the feed signal minus the effluent signal. The delta signal is used for determining the breakthrough point and the saturation point which, in turn, can be used for controlling the start and stop of certain chromatography process steps. However, WO 2010/151214 A1 does not address the problem of precise referencing. As explained above, in the process application the spectrometer at the feed line does not see the correct or ideal matrix to measure l₀.

Summarized, quantitative predictions require a correct referencing which is not given with a setup with a single absorbance measurement. Even if two measurement systems upstream and downstream of a chromatography unit are installed, the autonomous measurement systems are not able to acquire spectra based on an optimal reference.

It is an object of the invention to provide an improved referencing of an analyte measurement in a purification system, especially in downstream applications.

The above problem is solved by a method according to claim 1. Advantageous and expedient embodiments of the invention are apparent from the dependent claims.

The invention provides a method of referencing an analyte measurement in a purification system during a process step in a biopharmaceutical process. According to the invention, the following sub-steps are performed during the same process step: guiding a medium through a purification unit where the analyte is either removed from or added to the medium; measuring at least one parameter related to the presence and/or quantity of the analyte with a first measurement system at a first measurement location upstream of the purification unit; measuring the at least one parameter with a second measurement system at a second measurement location downstream of the purification unit; and referencing the upstream measurement to the downstream measurement, or referencing the downstream measurement to the upstream measurement.

A "purification system" in the sense of the present invention can be a chromatography system or a filtration system or a selective affinity purification system or any other separation/retention system used in a process step, especially in a downstream process step, of a biopharmaceutical process to retain either a target product or contaminants. A "medium" in the sense of the invention is a fluid or a gas. Depending on the actual application it can be a cell broth, a solution, an eluent etc.

The invention is based on the finding that with a single measurement system or several autonomous measurement systems that are integrated in a downstream process it is not possible to provide an ideal reference for the measurements. However, in a purification system, especially in a chromatography system, where an analyte is either removed from a medium, such as during filling of a chromatography unit, or added to a medium, such as during elution of a chromatography unit, this problem can be solved by performing two measurements and referencing one measurement to the other one. In particular, one measurement is made at a location where the analyte is not present in the medium, and this measurement is used as the reference for the actual measurement related to the analyte, which is performed at another location where the analyte is present in the medium. This means that the two measurements are not just two measurements of the same parameter made at different locations. Rather, according to the invention, the measurement of one measurement system is directly linked to a reference measurement of the other measurement system.

The method according to the invention is not limited to chromatography systems. Rather, it can be used in virtually any purification system as defined above in which the analysis method establishes a relation to a "matrix", i.e. the medium without the analyte (after the analyte has been removed from or before the analyte has been added to the medium), in contrast to absolute measurements. Typical relative measurements that make reference to a fixed basic state (matrix) are absorbance measurements, but the method according to the invention can also be used for other kinds of relative measurements. The method according to the invention is particularly useful when the measurement of the medium without the analyte (matrix) cannot be performed at the same location where the analyte is present in the medium (before removal or after addition of the analyte).

In an exemplary first use case, both measurements are made during a filling step in which the analyte is adsorbed in the purification unit (e.g. a chromatography unit). Accordingly, the analyte is present in the medium before it reaches the purification unit, but not when the medium exits the purification unit. In this case, when the measurement systems are UV/Vis spectrophotometers, the upstream measurement includes measuring absorbance of the medium including the analyte (before it reaches the purification unit), and the downstream measurement includes measuring absorbance of the medium without the analyte (after it has passed the purification unit).

In an exemplary second use case, both measurements are made during an elution step in which the analyte is released from an adsorbent in the purification unit. Compared to the first use case, presence of the analyte is vice versa relative to the purification unit. Accordingly, when the measurement systems are UV/Vis spectrophotometers, here measurement downstream of the purification unit includes measuring absorbance of the medium including the analyte, and the other measurement upstream of the purification unit includes measuring absorbance of the medium without the analyte.

It is to be noted that, in the sense of the invention, transmission measurements shall also include measurements in transflection mode in which reflection and transmission are both taken into account.

The invention also provides a purification system comprising a measurement setup configured to perform the method according to the invention.

In particular, the purification system according to the invention comprises at least one purification unit, a feed line leading to an inlet of the purification unit, and an effluent line leading away from an outlet of the purification unit. The purification system further comprises a first measurement system arranged at the feed line for measuring at least one parameter of a medium related to the presence and/or quantity of an analyte, and a second measurement system arranged at the effluent line for measuring the at least one parameter. The purification system also comprises referencing means configured to reference the measurement of the first measurement system to the measurement of the second measurement system, or to reference the measurement of the second measurement system to the measurement of the first measurement system.

Preferably, the first and second measurement systems are both UV/Vis spectrophotometers. However, other types of measurements systems capable of measuring at least one parameter of a medium related to the presence and/or quantity of an analyte can be used as well, such as NIR spectrophotometers, for example.

For an optimum referencing of the measurements, both UV/Vis spectrophotometers should be identical with regards to light throughput and optical path, as far as this is possible. This can be ensured, for example, by aligning the spectral intensity of the two hardware systems in a factory acceptance test with an identical sample or similar samples.

The referencing means of the measurement setup can be part of a (separate) control unit, if the measurement systems are not capable of applying a measurement from another measurement system as a reference.

Further features and advantages of the invention will become apparent from the following description and from the accompanying drawings to which reference is made. In the drawings:
- Figure 1 shows a sequence of downstream processing steps with one interposed absorbance measurement;
- Figure 2 shows the same sequence of downstream processing steps with two interposed absorbance measurement; and
- Figure 3 shows relevant components of a purification setup for performing the method of referencing an analyte measurement according to the invention.

As already described above, Figures 1 and 2 illustrate typical sequences of sub-steps in a downstream process with one or two interposed absorbance measurements, respectively.

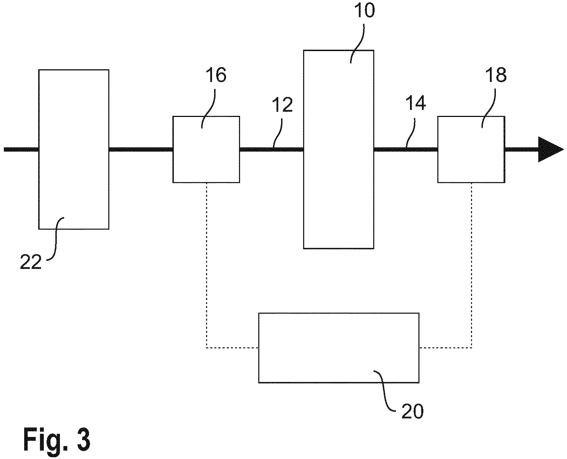

Figure 3 schematically illustrates a purification system comprising a measurement setup used in a downstream process step. The purification system can be a filtration system, such as a membrane filtration system (e.g. cross-flow filtration) or a precoat filtration system, or a selective affinity filtration system, or a chromatography system for recovering a biosynthetic product, e.g. a target protein, from a cell broth and purifying the product. Of course, the chromatography system is not limited to this application, but can also be used in viral based therapies, plasmid DNA (pDNA), microbial, advanced therapies, microcarrier processes, cell-free gene therapy or other applications. However, for the sake of simplicity, the following description relates to a purification system in the form of a chromatography system used for recovering a target protein.

The chromatography system includes a purification unit, here a chromatography unit 10 (column or membrane). A feed line 12 leads to an inlet of the chromatography unit 10, and an effluent line 14 leads away from an outlet of the chromatography unit 10.

A first measurement system 16 for measuring at least one parameter of a medium related to the presence and/or quantity of an analyte is arranged at the feed line 12. A second measurement system 18 is arranged at the effluent line 14 for measuring the same parameter. In the example described further below, the measurement systems 16, 18 are UV/Vis spectrophotometers which are identical with regards to light throughput and optical path.

Both measurement systems 16, 18 are connected to a control unit 20 configured to reference the measurement of the first measurement system 16 to the measurement of the second measurement system 18, or vice versa. The control unit 20 does not necessarily have to be a separate component. In fact, the control unit may be part of a superordinated control system or it may be part of one of the measurement systems 16, 18.

The working principle of the measurement system including the two measurement systems 16, 18 will be explained below in connection with two typical use cases in a downstream process. For the sake of simplicity, it is assumed that the first and second measurement systems 16, 18 only make one measurement during the corresponding process step. Of course, it is also possible that one or both of the measurement systems 16, 18 make repeated measurements.

For example, the downstream process includes a capture step in which insolubles are removed from a cell broth (medium) by a filtration unit 22 or a similar device. The filtered cell broth is then supplied to the chromatography unit 10 via the feed line 12.

In the chromatography unit 10 the target protein binds to a resin or a membrane (adsorbent), e.g. a Protein A membrane. The medium with depleted target protein flows through the outlet of the chromatography unit 10 into the effluent line 14.

This filling step is monitored by a first measurements made with the first measurement system 16 at the feed line 14. This means that the first measurement is made upstream of the chromatography unit 10 where the target protein is still present in the medium.

During the filling step the second measurement system 18 makes a second measurement at the effluent line 16 downstream of the chromatography unit 10, i.e. after the target protein has been removed.

The second measurement of the medium without the target protein is used to reference the first measurement. The difference in the signals (recorded spectra) corresponds to the presence or quantity of the target protein (analyte).

In particular, considering a measurement setup in which both measurement units 16, 18 are UV/Vis spectrophotometers, absorbance of the target protein, i.e. "I", is measured with the first measurement system 16 upstream of the chromatography unit 10. As a reference for this measurement, absorbance of the medium without the target protein (reference matrix), i.e. "l₀", is separately measured during the filling step with the second measurement system 18 downstream of the chromatography unit 10. The actual (corrected) absorbance of the medium with the target protein can then be obtained on the basis of the two independent measurements.

The referencing procedure can be performed in the control unit 20 after the first and second measurements have been sent to the control unit 20. According to an alternative, the second measurement is sent to the first measurement unit 16 which is configured to apply the second measurement as a reference for the first measurement.

In a subsequent elution step of the downstream process a different medium (buffer) is sent through the chromatography unit 10. The composition of the buffer is chosen to allow the target protein to be released from the adsorbent. The buffer including the target protein flows through the outlet of the chromatography unit 10 into the effluent line 14.

First and second measurements are made with the first and second measurement systems 16, 18 upstream and downstream of the chromatography unit 10, respectively. In this use case the buffer in the feed line 12, where the first measurement system 16 is arranged, does not contain the target protein, whereas in the effluent line 14, where the second measurement system 18 is arranged, the buffer is enriched with the target protein.

The second measurement made with the second measurement system 18 is used to monitor the elution step. The second measurement is referenced to the first measurement made with the first measurement system 16 in a similar manner as described above for the reversed case. The deviation between the first measurement (reference spectrum) and the second measurement (actual spectrum) corresponds to the presence or quantity of the target protein target protein.

In this use case the absorbance of the medium including the target protein, i.e. "I", is measured with the second measurement system 18 downstream of the chromatography unit 10. As a reference for this measurement, the absorbance of the medium without the target protein, i.e. "l₀", is separately measured during the elution step with the first measurement system 16 upstream of the chromatography unit 10. The actual (corrected) absorbance of the medium with the target protein can then be obtained on the basis of the two independent measurements.

The downstream process may include further process steps, like purification and product polishing, which are not of interest here in connection with the analyte measurements.

The main field of use of the described referencing procedure is UV/Vis spectroscopy (absorbance measurements) in downstream applications. However, in principle, the approach can be used in any production step that is either enriching or depleting a single or even two or more analytes in a controlled manner.

For example, the referencing method can also be used with fluorescence measurements (instead of absorbance measurements). In this case a fluorescence spectrum (or even a fluorescence signal without spectral resolution) is referenced to a fluorescence spectrum (signal) without the analyte. The referencing method is also useful with Raman spectroscopy and other light-scattering techniques, e.g. for particle detection when only some sizes of particles are filtered and the distribution of the particle size of interest changes in the purification system. The method can also be applied with non-optical measurements, such as dielectric spectroscopy used for e.g. cell count or viability measurements. A measurement before a cell retention filter can be referenced to a measurement of in the cell-free medium after the retention filter, thus enabling correction for media changes over time. Another type of non-optical measurements is (multi frequency) ultrasound detection for particle detection.

According to a pre- and post-purification referencing approach the first measurement system can be operated in a multiplexing mode, or it is a dual channel system where two l₀ channels are connected to a probe heads either side of the purification system, respectively.

### List of Reference Signs

- 10: chromatography unit
- 12: feed line
- 14: effluent line
- 16: first measurement system
- 18: second measurement system
- 20: control unit
- 22: filtration unit

## Claims

1. A method of referencing an analyte measurement in a purification system during a process step in a biopharmaceutical process, wherein the following sub-steps are performed during the same process step:
- guiding a medium through a purification unit (10) where the analyte is either removed from or added to the medium;
- measuring at least one parameter related to the presence and/or quantity of the analyte with a first measurement system (16) at a first measurement location upstream of the purification unit (10);
- measuring the at least one parameter with a second measurement system (18) at a second measurement location downstream of the purification unit (10); and
- referencing the upstream measurement to the downstream measurement, or referencing the downstream measurement to the upstream measurement.

2. The method according to claim 1, **characterized in that** both measurements are made during a filling step in which the analyte is adsorbed in the purification unit (10).

3. The method according to claim 2, **characterized in that** the upstream measurement includes measuring absorbance of the medium including the analyte, and the downstream measurement includes measuring absorbance of the medium without the analyte.

4. The method according to claim 1, **characterized in that** both measurements are made during an elution step in which the analyte is released from an adsorbent in the purification unit (10).

5. The method according to claim 4, **characterized in that** the downstream measurement includes measuring absorbance of the medium including the analyte, and the upstream measurement includes measuring absorbance of the medium without the analyte.

6. A purification system comprising a measurement setup configured to perform the method according to any of the previous claims.

7. The purification system according to claim 6, comprising
at least one purification unit (10),
a feed line (12) leading to an inlet of the purification unit (10),
an effluent line (14) leading away from an outlet of the purification unit (10),
a first measurement system (16) arranged at the feed line (12) for measuring at least one parameter of a medium related to the presence and/or quantity of an analyte,
a second measurement system (18) arranged at the effluent line (14) for measuring the at least one parameter, and
referencing means configured to reference the measurement of the first measurement system (16) to the measurement of the second measurement system (18), or to reference the measurement of the second measurement (18) system to the measurement of the first measurement system (16).

8. The purification system according to claim 7, **characterized in that** the first and second measurement systems (16, 18) are both UV/Vis spectrophotometers.

9. The purification system according to claim 8, **characterized in that** both UV/Vis spectrophotometers are identical with regards to light throughput and optical path.

10. The purification system according to any of claims 7 to 9, **characterized in that** the referencing means are part of a control unit (20).
